(19) Europäisches Patentamt
European Patent Office
Office européen des brevets

(11) EP 0 624 626 B1

(12) EUROPÄISCHE PATENTSCHRIFT

(45) Veröffentlichungstag und Bekanntmachung des Hinweises auf die Patenterteilung:
**04.08.1999 Patentblatt 1999/31**

(51) Int Cl.[6]: **C08L 67/02**, C08K 13/04
// (C08K13/04, 3:22, 5:10, 7:14)

(21) Anmeldenummer: **94106835.5**

(22) Anmeldetag: **02.05.1994**

(54) **Flammgeschützte thermoplastische Formkörper mit hoher Kriechstromfestigkeit**

Flame-protected thermoplastic moulded articles with high tracking resistance

Pièces usinées thermoplastiques ignifugées à haute résistance aux-courants de fuite

(84) Benannte Vertragsstaaten:
**DE FR GB IT**

(30) Priorität: **14.05.1993 DE 4316189**

(43) Veröffentlichungstag der Anmeldung:
**17.11.1994 Patentblatt 1994/46**

(73) Patentinhaber: **BAYER AG**
**51368 Leverkusen (DE)**

(72) Erfinder:
- **Magerstedt, Herbert, Dipl.-Ing.**
  **D-47445 Moers (DE)**
- **Zander, Klaus, Dr.**
  **D-45478 Mülheim (DE)**
- **Schulz-Schlitte, Wolfgang, Dr.**
  **D-41540 Dormagen (DE)**
- **Kraus, Lars, Dipl.-Ing.**
  **D-51375 Leverkusen (DE)**

(56) Entgegenhaltungen:
**EP-A- 0 344 700**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 624 626 B1

Printed by Jouve, 75001 PARIS (FR)

## Beschreibung

Die Erfindung betrifft die Verwendung von thermoplastischen Formmassen auf der Basis von Polyalkylenterephthalat, Pentabrombenzylacrylat und Verstärkungsmitteln, zur Herstellung von Formkörpern, die eine hohe Kriechstromfestigkeit bei einem gleichzeitig guten flammwidrigen Verhalten und verbesserte Fließeigenschaften ohne Schädigung der thermoplastischen Matrix aufweisen.

Wie beispielsweise aus der Literatur Kunststoffe 80 (1990), Seite 3 und 4, bekannt ist, lassen sich Kunststoffe, wie Duroplaste, Elastomere, Polyamid, Polycarbonat, etc. durch den Einsatz halogenierter Kohlenwasserstoffe flammhemmend einstellen.

Aus den oben aufgeführten Literaturstellen ist zu entnehmen, daß Kunststoffteile, die halogenierte Kohlenwasserstoffe enthalten, zwar eine gute flammhemmende Wirkung aufweisen, aber relativ niedrige elektrische Eigenschaften haben.

EP-A 344 700 beschreibt mit Pentabrombenzylmonoacrylat ausgerüstete Formmassen, u.a. wird Polybutylenterephthalat genannt.

Es wurde gefunden, daß ein verstärktes Polyalkylenterephthalat, welches mit einem Pentabrombenzylacrylat (PBBMA) und gegebenenfalls Polyolefine ausgestattet ist, Formkörper ergibt, die eine nicht zu erwartende hohe Kriechstromfestigkeit und ein überraschend gutes Fließverhalten bei einem gleichzeitig guten flammwidrigen Verhalten und guten übrigen Eigenschaften ohne Schädigung der thermoplastischen Matrix aufweist.

Die Aufgabe der vorliegenden Erfindung ist, eine thermoplastische Formmasse auf Basis Polyalkylenterephthalat mit einem handelsüblichen, preiswerten und damit wirtschaftlichen Flammschutz bereitzustellen, wobei durch ein verbessertes Fließverhalten auch dünnwandigere bzw. größer dimensionierte Formkörper herstellbar sind und die aus dieser thermoplastischen Formmasse erhältlichen Formkörper oder Formteile sich durch eine gute flammschützende Wirkung bei einer gleichzeitig hohen Kriechstromfestigkeit ohne Schädigung der Matrix auszeichnen (kriechstromfeste, flammwidrige Formkörper).

Gegenstand der vorliegenden Erfindung ist die Verwendung von thermoplastischen Formmassen aus

A) 32,5 bis 74,5, vorzugsweise 35 bis 70, Gew.-Teilen Polyalkylenterephthalat,

B) 5 bis 20, vorzugsweise 6 bis 15, Gew.-Teilen Pentabrombenzylacrylat,

C) 0,5 bis 7,5, vorzugsweise 1 bis 6, Gew.-Teilen Antimontrioxid oder Antimonpentoxid und

D) 2 bis 40, vorzugsweise 4 bis 35, Gew.-Teilen Verstärkungsmittel,

wobei die Summe aus A+B+C+D oder 100 ergibt und wobei bis zu 25 Gew.-Teile, bevorzugt 1 bis 20 Gew.-Teile, Polyalkylenterephthalat durch aromatisches Polycarbonat und/oder Pfropfpolymerisat ersetzt sein können, und wobei 1 bis 10 Gew.-Teile (bezogen auf 100 Gew.-Teile Gesamtgewicht) Polyolefine zugesetzt werden können, zur Herstellung von Formkörpern, die eine hohe Kriechstromfestigkeit haben und flammwidrig sind.

### Komponente A

Polyalkylenenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80, vorzugsweise 90 Mol.-%, bezogen auf die Dicarbonsäurekomponente, Terephthalsäurereste und mindestens 80, vorzugsweise mindestens 90 Mol.-%, bezogen auf die Diolkomponente, Ethylenglykol- und/oder Butandiol-1,4-reste.

Die bevorzugten Polyalkylenterephthalate können neben Terephthalsäureresten bis zu 20 Mol.-% anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexandimethanol- 1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-OS 19 00 270 und der US-PS 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind (Polyethylen- und Polybutylentherephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente A verwendeten Polyalkylenterephthalate besitzen im allgemeinen eine Intrisic-Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

Ein Teil der Polyalkylenterephthalat-Komponente kann durch aromatisches Polycarbonat und gegebenenfalls kautschukelastische Polymerisate mit einer Glasübergangstemperatur von <-10°C ersetzt werden.

Auch die erfindungsgemäße Zugabe von wiederaufgearbeiteten Bestandteilen der thermoplastischen Formmassen ist möglich, ohne daß die beschriebenen Eigenschaften nachteilig beeinflußt werden. In der Regel können bis zu 25 Gew.-Teile des Polyalkylenterephthalats durch wiederaufgearbeitete Bestandteile dieser Mischung ersetzt werden.

Unter aromatischen Polycarbonaten im Sinne dieser Erfindung werden Homopolycarbonate und Mischungen dieser Polycarbonate verstanden, denen z.B. mindestens eines der folgenden Diphenole zugrunde liegt:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis-(hydroxyphenyl)-diisopropylbenzole

sowie deren kernalkylierte und kernhalogenierte Derivate.

Diese und weitere geeignete Diphenole sind z.B. in den US-PS 3 028 365, 2 999 835, 3 148 172, 2 275 601, 2 991 283, 3 271 367, 3 062 781, 2 970 131 und 2 999 846, in den deutschen Offenlegungsschriften 1 570 703, 2 063 050, 2 063 052, 2 211 956, 22 11 957 der französischen Patentschrift 1 561 518 und in der Monographie "H. Schnell, Chemistry und Physics of Polycarbonates, Interscience Publishers, New York 1964", beschrieben.

Bevorzugte Diphenole sind beispielsweise:

2,2-Bis-(4-Hydroxyphenyl)-propan,
1,1-Bis-(4-hydroxyphenyl)-cyclohexan,
2,2-Bis-(3,5-dichlor-4-hydroxyphenyl)-propan
2,2-Bis-(3,5-dibrom-4-hydroxyphenyl)-propan,
2,2-Bis-(3,5-dimethyl-4-hydroxyphenyl)-propan,
Bis-(3,5-dimethyl-4-hydroxyphenyl)-methan,
Bis-(4-hydroxyphenyl)-sulfid,
1,1-Bis-(4-hydroxyphenyl)-3,3,5-trimethylcyclohexan.

Die Diphenole können sowohl einzeln als auch im Gemisch eingesetzt werden.

Besonders bevorzugte aromatische Polycarbonate sind Polycarbonate auf der Basis von 2,2-Bis-(4-hydroxyphenyl)-propan bzw. einem der anderen als bevorzugt genannten Diphenole. Ganz besonders bevorzugt sind solche

auf Basis von 2,2-Bis-(4-hydroxyphenyl)-propran, 2,2-Bis-(3,5-dimethyl-4-hydroxyphenyl)-propan oder 1,1-Bis-(4-hydroxyphenyl)-3,3,5-trimethylcyclohexan oder Gemische aus 2,2-Bis-(4-hydroxyphenyl)-propan und 1,1-Bis-(4-hydroxyphenyl)-3,3,5-trimethylcyclohexan.

Die aromatischen Polycarbonate können nach bekannten Verfahren hergestellt werden, z.B. durch Schmelzumesterung eines entsprechenden Bisphenols mit Diphenylcarbonat und in Lösung aus Bisphenolen und Phosgen. Die Lösung kann homogen sein (Pyridinverfahren) oder heterogen (Zweiphasengrenzflächenverfahren) (vgl. H. Schnell, "Chemistry and Physics of Polycarbonates", Polymer Reviews, Vol. IX, S 33ff, Intersciencs Publ. 1964).

Die aromatischen Polycarbonate besitzen in der Regel mittlere Molekulargewichte $\overline{M}_w$ von ca. 10.000 bis 200.000, vorzugsweise 20.000 bis 80.000 (ermittelt durch Gelchromatographie nach vorheriger Eichung).

Copolycarbonate im Sinne der Erfindung sind insbesondere PoydiorganosiloxanPolycarbonat-Blockcopolymere mit mittlerem Molekulargewicht $\overline{M}_w$ von ca. 10.000 bis 200.000, vorzugsweise 20.000 bis 80.000 (ermittelt durch Gelchromatographie nach vorheriger Eichung) und mit einem Gehalt an aromatischen Carbonatstruktureinheiten von etwa 75 bis 97,5 Gew.-%, bevorzugt 85 bis 97 Gew.-% und einem Gehalt an Polydiorganosiloxanstruktureinheiten von etwa 25 bis 2,5 Gew.-%, bevorzugt 15 bis 3 Gew.-%, wobei die Blockcopolymeren ausgehend von $\alpha,\omega$-Bishydroxyaryloxyendgruppen-haltigen Polydiorganosiloxanen mit einem Polymerisationsgrad $P_n$ von 5 bis 100, bevorzugt 20 bis 80, hergestellt werden.

Die Polydiorganosiloxan-Polycarbonat-Blockpolymeren können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung ca. 2,5 bis 25 Gew.-% beträgt.

Solche Polydiorganosiloxan-Polycarbonat-Blockcopolymere sind dadurch gekennzeichnet, daß sie in der Polymerkette einerseits aromatische Carbonatstruktureinheiten (1) und andererseits Aryloxyendgruppen-haltige Polydiorganosiloxane (2) enthalten,

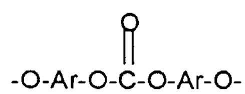

(1),

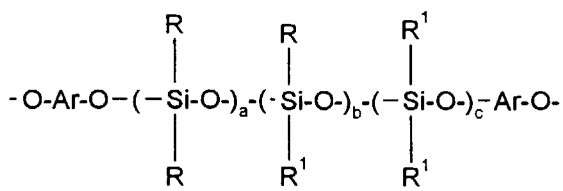

(2),

worin

| | |
|---|---|
| Ar | gleiche oder verschiedene Arylreste aus Diphenolen sind und |
| R und $R^1$ | gleich oder verschieden sind und lineares Alkyl, verzweigtes Alkyl, Alkenyl, halogeniertes lineares Alkyl, halogniertes verzweigtes Alkyl, Aryl oder halogeniertes Aryl, vorzugsweise aber Methyl bedeuten, |

und

die Anzahl der Diorganosiloxy-Einheiten n=a+b+c= 5 bis 100, vorzugsweise 20 bis 80, ist.

Alkyl ist in vorstehender Formel (2) beispielsweise $C_1$-$C_{20}$-Alkyl, Alkenyl ist in vorstehender Formel (2) beispielsweise $C_2$-$C_6$-Alkenyl; Aryl ist in vorstehender Formel (2) $C_6$-$C_{14}$-Aryl. Halogeniert bedeutet in vorstehender Formel teilweise oder vollständig chloriert, bromiert oder fluoriert.

Beispiele für Alkyle, Alkenyle, Aryle, halognierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige Polydiorganosiloxan-Polycarbonat-Blockcopolymere sind z.B. aus US-PS 3 189 662, US-PS 3 821 325 und US-PS 3 832 419 bekannt.

Bevorzugte Polydiorganosiloxan-Polycarbonat-Blockcopolymere werden hergestellt, indem man $\alpha,\omega$-Bishydroxyaryloxyendgruppen-haltige Polydiorganosiloxane zusammen mit anderen Diphenolen, gegebenenfalls unter Mitverwendung von Verzweigern in den üblichen Mengen, z.B. nach dem Zweiphasengrenzflächenverfahren (s. dazu H. Schnell, Chemistry and Physics of Polycarbonates Polymer Rev. Vol. IX, Seite 27 ff, Interscience Publishers New York 1964) umsetzt, wobei jeweils das Verhältnis der bifunktionellen phenolischen Reaktanten so gewählt wird, daß daraus

der erfindungsgemäße Gehalt an aromatischen Carbonatstruktureinheiten und Diorganosiloxy-Einheiten resultiert.

Derartige α,ω-Bishydroxyaryloxyendgruppen-haltige Polydiorganosiloxane sind z.B. aus US 3 419 634 bekannt.

Die kautschukelastischen Polymerisate umfassen Copolymerisate - insbesondere Pfropfcopolymerisate - mit kautschukelastischen Eigenschaften, die im wesentlichen aus mindestens 2 der folgenden Monomeren erhältlich sind:

Chloropren, Isopren, Isobuten, Styrol, Acrylnitril, Ethylen, Propylen, Vinylacetat und (Meth)Arcylsäureester mit 1 bis 18 C-Atomen in der Alkoholkomponente; also Polymerisate wie sie, z.B. in "Methoden der organischen Chemie" (Houben-Weyl), Bd. 14/1, Georg-Thieme-Verlag, Stuttgart 1961, s. 393-406 und in C.B. Bucknall, "Toughened Plastics", Appl. Science Publishers, London 1977, beschrieben sind. Die Polymerisate besitzen einen Gelgehalt von über 20, vorzugsweise über 40 Gew.-%. Die Glasübergangstemperatur (Tg) liegt unter - 20°C.

Bevorzugte Polymerisate sind selektiv hydrierte Blockcopolymerisate eines vinylaromatischen Monomeren (X) und eines konjugierten Diens (Y) von X-Y-Typ. Diese Blockcopolymerisate können nach bekannten Verfahren hergestellt werden.

Im allgemeinen kann für die Herstellung der geeigneten X-Y-Blockcopolymerisate aus Styrol, α-Methylstyrol, Vinyltoluol usw. und aus konjugierten Dienen, wie Butadien, Isopren usw., die für die Herstellung von Styrol-Dien-Blockpolymerisaten verwendete Technologie benutzt werden, die in "Encyclopedia of Polymer Science and Technology", Bd. 15, Interscience, N.Y. (1971) auf den Seiten 508 ff beschrieben ist. Die selektive Hydrierung kann auf an sich bekannten Wegen durchgeführt werden und bedeutet, daß die ethylenischen Doppelbindungen im wesentlichen vollständig hydriert werden, wobei die aromatsichen Doppelbindungen im wesentlichen unbeeinflußt bleiben.

Derartige selektiv hydrierte Blockcopolymerisate werden z.B. in der DE-OS 3 000 282 beschrieben.

Bevorzugte Polymerisate sind z.B. mit Stryrol und/oder Acrylnitril und/oder (Meth)Acrylsäurealkyestern gepfropfte Polybutadiene, Butadien/Styrol-Copolymerisate und Poly(meth)acrylsäureester, z.B. Copolymerisate aus Styrol oder Alkylstryrol und konjugierten Dienen (schlagfestes Polystyrol), d.h. Copolymerisate der in der DE-OS 1 694 173 (= US-PS 3 564 077) beschriebenen Art, mit Acryl- oder Methacrylsäureestern, Vinylacetat, Acrylnitril, Styrol und/oder Alkylstyrolen gepfropfte Polybutadiene, Butadien/- Styrol- oder Butadien/Acrylnitril-Copolymerisate, Polyisobutene oder Polyisoprene, wie sie z.B. in der DE-OS 2 348 377 (= US-PS 3 919 353) bzw. in der DE-A-3 105 364 und DE-A-3 019 233 beschrieben sind.

Besonders bevorzugte Polymerisate sind z.B. ABS-Polymerisate (sowohl Misch- als auch Pfropftypen), wie sie z.B. in der DE-OS 2 035 390 (= US-PS 3 644 574) oder in der DE-OS 2 248 242 (= GB-PS 1 409 275) beschrieben sind.

Darüber hinaus sind besonders bevorzugte Polymerisate Pfropfpolymerisate, die durch Pfropfreaktion von

I. 10 bis 40, vorzugsweise 10 bis 35 Gew.-% bezogen auf Pfropfprodukt, mindestens eines (Meth)Acrylsäureesters und/oder eines Gemisches aus 10 bis 40, vorzugsweise 20 bis 35 Gew.-%, bezogen auf Gemisch, Acrylnitril und 60 bis 90, vorzugsweise 65 bis 80 Gew.-%, bezogen auf Gemisch, Styrol auf

II. 60 bis 90, vorzugsweise 65 bis 90 Gew.-%, bezogen auf Pfropfprodukt, eines Butadien-Polymerisats mit mindestens 70 Gew.-%, bezogen auf II, Butadienresten als Pfropfgrundlage erhältlich sind,

wobei vorzugsweise der Gelanteil der Pfropfgrundlage II ≥70 % (in Toluol gemessen), der Pfropfgrad G 0,15 bis 0,55 und der mittlere Teilchendurchmesser $d_{50}$ des Pfropfpolymerisats C 0,2 bis 0,6 µm, vorzugsweise 0,3 bis 0,5 µm betragen (vgl. z.B. EP 0 131 202).

(Meth)Acrylsäureester I sind Ester der Acrylsäure bzw. Methacrylsäure und einwertiger Alkohole mit 1 bis 8 C-Atomen.

Die Pfropfgrundlage II kann neben Butadienresten bis zu 30 Gew.-% bezogen auf II, Reste anderer ethylenisch ungesättigter Monomerer, wie z.B. Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat) enthalten. Die bevorzugte Pfropfgrundlage II besteht aus reinem Polybutadien.

Da bei der Pfropfreaktion die Pfropfmonomeren I bekanntlich nicht vollständig auf die Pfropfgrundlage II aufpfropfen, werden erfindungsgemäß unter Pfropfpolymerisaten auch solche Produkte verstanden, die neben den eigentlichen Pfropfpolymerisaten auch Homo- und Copolymerisate der eingesetzten Pfropfmonomeren I enthalten.

Der Pfropfgrad G bezeichnet das Gew.-Verhältnis von aufgepfropften Pfropfmonomeren zu Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H.Lange, Kolloid, Z. und Z. Polymere 250 (1972), 782-796) oder mittels Elektronenmikroskopie und anschließende Teilchenauszählung (C. Kämpf, H.Schuster, Angew. Makromolekulare Chemie 14, (1970), 111-129) oder mittels Lichtstreuungsmessungen.

Besonders bevorzugte kautschukelastische Polymerisate sind z.B: auch Pfropfpolymerisate aus

a) 25 bis 98 Gew.-%, bezogen auf 100 Gew.-% Pfropfpolymerisat, Acrylatkautschuk mit einer Glasübergangstemperatur unter -20°C als Pfropfgrundlage und

b) 2 bis 75 Gew.-%, bezogen auf 100 Gew.-% Pfropfpolymerisat, mindestens eines polymerisierbaren, ethylenisch ungesättigten Monomeren, dessen bzw. deren in Abwesenheit von (a) entstandenen Homo- bzw. Copolymerisate eine Glasübergangstemperatur von 25°C hätten, als Pfropfmonomere.

Die Acrylatkautschuke (a) sind vorzugsweise Polymerisate aus Acrylsäurealkylestern, gegebenenfalls mit bis zu 40 Gew.-% anderer polymerisierbarer, ethylenisch ungesättigter Monomerer. Sofern die als Pfropfgrundlage (a) eingesetzten Acrylatkautschuke - wie nachfolgend beschrieben - ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1$-$C_8$-Alkylester, beispielsweise Methyl-, Ethyl-, Butyl, Octyl- und 2-Ethylhexylester; Halogenalkylester, vorzugsweise Halogen-$C_1$-$C_8$-alkylester, wie Chlorethylacrylat und aromatische Ester wie Benzylacrylat und Phenethylacrylat. Sie können einzeln oder in Mischung eingesetzt werden.

Die Acrylatkautschuke (a) können unvernetzt oder vernetzt, vorzugsweise partiell vernetzt sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen oder gesättigter Polyole mit 2 bis 4 OH-Gruppen und 2 bis 20 C-Atomen, wie z.B. Ethylenglykoldimethacrylat, Alylmethacrylat, mehrfach ungesättigte heterocyclische Verbindungen, wie z.B. Trivinyl- und Triallylcyanurat und -isocyanurat, Tris-acryloyl-s-triazine, insbesondere Triallylcyanurat; polyfunktionelle Vinylverbindungen wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf <1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-$C_1$-$C_6$-alkylether. Bevorzugte Acrylkautschuke als Pfropfgrundlage (a) sind Emulsionspolymerisate, die einen Gelgehalt von ≥60 Gew.-% aufweisen.

Der Gelgehalt der Pfropfgrundlage (a) wird bei 25°C in Dimethylformamid bestimmt (M.Hoffmann, H.Krämer, R.Kuhn, Polymeranalytik I und II, Georg Thieme-Verlag, Stuttgart 1977).

Acrylatkautschuke als Pfropfgrundlage (a) können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil des Polydien-Kerns in der Pfropfgrundlage (a) kann 0,1 bis 80, bevorzugt 10 bis 50 Gew.-%, bezogen auf (a), betragen. Schale und Kern können unabhängig voneinander unvernetzt, teilvernetzt oder hochvernetzt sein.

Ganz besonders bevorzugt sind die zuvor erwähnten Pfropfpolymerisate aus Polybutadien als Pfropfgrundlage und (Meth)Acrylsäureester und Acrylnitril als Pfropfauflage, wobei die Pfropfgrundlage aus 65 bis 90 Gew.-% Teilen vernetztem Polybutadien mit einem Gelgehalt von über 70 % (in Toluol) und die Pfropfgrundlage aus einem 5:1 bis 20:1 Gemisch aus Methylmethacrylat und n-Butylacrylat bestehen (z.B. DE 3 105 364, DE 3 019 233).

**Komponente B und C**

Pentabrombenzylacrylat hat folgende Struktur

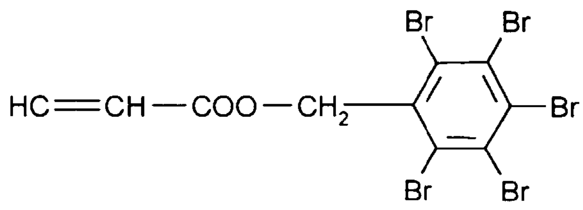

und ist eine allgemein bekannte Verbindung.

Antimontrioxid und Antimonpentoxid sind ebenfalls allgemein bekannte Verbindungen.

**Komponente D:**

Als Verstärkungsmittel kommen verstärkend wirkende Füllstoffe in Frage. Bevorzugt sind dabei faserförmige Stoffe, insbesondere Glasfasern, mit einem Faserdurchmesser zwischen ca. 8 bis 14 µm.

Die Glasfasern können als Endlosfasern oder als geschnittene oder gemahlene Glasfasern eingesetzt werden, wobei die Fasern mit einem geeigneten Schlichtesystem und einem Haftvermittler bzw. Haftvermittlersystem auf Silanbasis ausgerüstet sein können.

Es können aber auch andere faserförmige Verstärkungsmaterialien wie Kohlenstoffasern, K-Titanat-Einkristallfasern, Gipsfasern, Aluminiumoxidfasern oder Asbest eingearbeitet werden. Nichtfasrige Füllstoffe wie z.B. Glaskugeln, Hohlglaskugeln oder Kreide, Quarze, natürliche und calcinierte Kaoline sind ebenso bevorzugt wie Kombinationen dieser Materialien mit Glasfasern. Diese Füllstoffe können wie die Glasfasern ebenfalls mit einer Schlichte und/oder einem Haftvermittler oder Haftvermittlersystem versehen sein.

Insbesondere werden Glasfasern verwendet.

Die thermoplastische Formmasse kann 1 bis 10, insbesondere 2 bis 8 Gew.-Teile (bezogen auf 100 Gew.-Teile Gesamtgewicht) Polyolefine enthalten. Geeignete Polyolefine sind Polymere von aliphatischen ungesättigten Kohlenwasserstoffen, wie beispielsweise Ethylen, Propylen, Butylen oder Isobutylen, die nach üblichen Verfahren z. B. Radikalpolymerisation erhalten werden und mittlere Gewichtsmittel-Molekulargewichte $\overline{M}_w$ (gemessen nach gelchromatographischen Methoden) zwischen 3000 und 3.000.000 haben. Es ist sowohl Hochdruck- als auch Niederdruckpolyoefin verwendbar. Bevorzugt sind Polyethylene und Polypropylene.

Die Formmassen können Nukleierungsmittel wie Mikrotalk enthalten. Weiterhin können die Formmassen übliche Zusatzstoffe wie Gleit- und Entformungsmittel, Verarbeitungsstabilisatoren sowie Farbstoffe und Pigmente enthalten.

Aus den Formmassen hergestellte Formkörper können Bauteile aus dem Elektrosektor sein, für die eine hohe Kriechstromfestigkeit bei einem gleichzeitig guten flammwidrigen Verhalten, ohne Schädigung der thermoplastischen Matrix gewünscht werden. So kommen z.B. Gehäuseteile, Steckerleister und Leuchtensockel sowie Teile aus dem Kraftfahrzeugsektor zum Einsatz.

Die Komponenten werden gemischt und in einer Spritzgrußmaschine bei üblichen Verarbeitungsbedingungen für Polyalkylenterephthalate (Massetemperatur ca. 260°C) zu Formteilen verarbeitet. Entsprechend werden auch die in den Beispielen angegebenen Komponenten gemischt und bei einer Massetemperatur von ca. 260°C zu Prüfkörpern verarbeitet.

**Beschreibung der Testmethoden:**

Niederspannungskriechwegbildung (CTI), Prüflösung A gemäß DIN-Norm VDE 0303 Teil I, IEC 112
Flammtest gemäß UL 94/IEC 707 FV
Wärmeformbeständigkeit (Vicat B) gemäß DIN 53 460
Biegeversuch gemäß DIN 53 452
Schlagzähigkeit nach IZOD 180
Melt Volume Index gemäß DIN 53735

**Beispiele**

**Beispiel 1** (erfindungsgemäß)

| | |
|---|---|
| 55,0 Gew.-% | Polybutylenterephthalat (PBT), Grenzviskosität 1,185+ / -0,015 |
| 10,0 Gew.-% | Pentabrombenzylacrylat |
| 30,0 Gew.-% | Glasfasern Typ OC29R (Owens/Corning) |
| 4,5 Gew.-% | Antimontrioxid |

(fortgesetzt)

| | |
|---|---|
| 0,5 Gew.-% | Additive (Verarbeitungshilfsmittel, Stabilisatoren) |

**Beispiel 2** (erfindungsgemäß)

| | |
|---|---|
| 55,1 Gew.-% | Polybutylenterephthalat (PBT), Grenzviskosität 1,185+ / -0,015 |
| 10,0 Gew.-% | Pentabrombenzylacrylat |
| 30,0 Gew.-% | Glasfasern Typ OC29R (Owens/Corning) |
| 4,5 Gew.-% | Antimontrioxid |
| 0,1 Gew.-% | Polytetrafluorethylen (Hostaflon TF 2021/Hoechst AG) |
| 0,3 Gew.-% | Additive (Verarbeitungshilfsmittel, Stabilisatoren) |

**Beispiel 3** (Vergleich)

| | |
|---|---|
| 55,0 Gew.-% | Polybutylenterephthalat (PBT), Grenzviskosität 1,185+ / -0,015 |
| 10,0 Gew.-% | Tetrabrombisphenol-A-oligocarbonat Great Lakes BC52HP |
| 30,0 Gew.-% | Glasfasern Typ OC29R (Owens/Corning) |
| 4,5 Gew.-% | Antimontrioxid |
| 0,5 Gew.-% | Additive (Verarbeitungshilfsmittel, Stabilisatoren) |

**Beispiel 4** (Vergleich)

| | |
|---|---|
| 55,1 Gew.-% | Polybutylenterephthalat (PBT), Grenzviskosität 1,185+ / -0,015 |
| 10,0 Gew.-% | Tetrabrombisphenol-A-oligocarbonat Great Lakes BC52HP |
| 30,0 Gew.-% | Glasfasern Typ OC29R (Owens/Corning) |
| 4,5 Gew.-% | Antimontrioxid |
| 0,1 Gew.-% | Polytetrafluorethylen (Hostaflon TF 2021/Hoechst AG) |
| 0,3 Gew.-% | Additive (Verarbeitungshilfsmittel, Stabilisatoren) |

Tabelle 1

| **Flammgeschützte thermoplastische Formmasse mit hoher Kriechstromfestigkeit** | | | | | |
|---|---|---|---|---|---|
| Eigenschaften | Prüfvorschrift | Bsp.1 | Bsp.2 | Bsp.3 | Bsp.4 |
| | | erfindungsgemäß | erfindungsgemäß | Vergleich | Vergleich |
| CTI | VDE 0303/1 | 225 | 250 | 200 | 175 |
| Flammtest | | | | | |
| 0,8 mm | UL 94 (IEC707) | V0 | V2 | V2 | V2 |
| 1,6 mm | UL 94 (IEC707) | V0 | V0 | V2 | V0 |
| Wärmeformbest. | | | | | |
| Vicat B 120 | DIN 53 460 | 205 | 205 | 210 | 210 |
| Schlagzähigkeit | | | | | |
| Izod [kJ/m$^2$] | ISO 180/1U | 42 | 47 | 41 | 46 |
| Biegeversuch | | | | | |

Tabelle 1 (fortgesetzt)

| Flammgeschützte thermoplastische Formmasse mit hoher Kriechstromfestigkeit | | | | | |
|---|---|---|---|---|---|
| Eigenschaften | Prüfvorschrift | Bsp.1 | Bsp.2 | Bsp.3 | Bsp.4 |
| Schlagzähigkeit | | | | | |
| E-Modul [N/mm$^2$] | DIN 53 457-B3 | 10250 | 10390 | 10010 | 10350 |
| Fließfähigkeit | | | | | |
| MVI, 280°C / 2,16 kg [cm$^3$ / 10 min] | DIN 53 735 | 15 | 13 | 10 | 10 |

Aus der Tabelle geht hervor, daß die Prüfkörper, welche aus den erfindungsgemäßen Formmassen hergestellt wurden, eine deutlich bessere Kriechstromfestigkeit haben, als die Vergleichsprüfkörper. Darüberhinaus zeigen die erfindungsgemäßen Prüfkörper einen besseren E-Modul, Melt Volume Index.

In der folgenden Tabelle 2 sind weitere Beispiele aufgeführt. Die eingesetzten Komponenten sind identisch mit denjenigen, die in den Beispielen 1 bis 4 beschrieben sind.

TBBOC = Tetrabrombisphenol-A-oligocarbonat Great Lakes BC 52 HP

PBBA = Pentabrombenzylacrylat

ABS = Pfropfpolymer aus 25 Gew.-Teilen Styrol und Acrylnitril (Gewichtsverhältnis 72:28) auf 75 Gew.-Teile teilchenförmigen, vernetzten Butadien-Kautschuk (mittlerer Teilchendurchmesser $d_{50}$ = 0,4 µm), hergestellt durch Emulsionspolymerisation

PP = Polypropylen (Novolen® 1100L, BASF AG), MVI (melt volume index) = 12 cm$^3$/10 min bei 260°C und einer Belastung von 5 kg (ISO 1133).

Tabelle 2

| (Zusammensetzung: Angaben in Gew.-%) | | | | | | |
|---|---|---|---|---|---|---|
| | Bsp. 5 Vergl. | Bsp. 6 erf. gem. | Bsp. 7 erf. gem. | Bsp. 8 erf. gem. | Bsp. 9 erf. gem. | Bsp.10 erf. gem. |
| PBT | 56,9 | 56,9 | 53,0 | 49,4 | 53,4 | 40,8 |
| Glasfaser | 30,0 | 30,0 | 30,0 | 30,0 | 30,0 | 25,0 |
| TBBOC | 8,0 | - | - | - | - | - |
| PBBA | - | 8,0 | 11,0 | 8,0 | 8,0 | 9,0 |
| $Sb_2O_3$ | 4,5 | 4,5 | 5,4 | 4,0 | 4,0 | 4,5 |
| Gips | - | - | - | 4,0 | 4,0 | 10,0 |
| ABS | - | - | - | - | - | 10,0 |
| PP | - | - | - | 4,0 | - | - |
| Additive | 0,6 | 0,6 | 0,6 | 0,6 | 0,6 | 0,7 |
| Ergebnisse | | | | | | |
| UL 94; 0,8 mm | V2 | V2 | V0 | - | - | V0 |
| UL 94; 1,6 mm | V0 | V0 | V0 | V0 | V0 | V0 |
| CTI | 175 | 250 | 250 | 350 | 300 | 425 |
| E-Modul [N/mm$^2$] | 9.000 | 10.140 | 10.500 | 10.000 | 10.500 | 8.000 |

Tabelle 2 (fortgesetzt)

| (Zusammensetzung: Angaben in Gew.-%) | | | | | | |
|---|---|---|---|---|---|---|
| | Bsp. 5 Vergl. | Bsp. 6 erf. gem. | Bsp. 7 erf. gem. | Bsp. 8 erf. gem. | Bsp. 9 erf. gem. | Bsp.10 erf. gem. |
| Ergebnisse | | | | | | |
| Vicat B 120 | 210 | 213 | 208 | 206 | 205 | 197 |
| MV I 260°C/ 5 kg [$cm^3$/10 min] | 30 | 44 | 56 | 49 | 53 | - |

**Patentansprüche**

1. Verwendung von thermoplastischen Formmassen aus

A) 32,5 bis 74,5 Gew.-Teilen Polyalkylenterephthalat,

B) 5 bis 20 Gew.-Teilen Pentabrombenzylacrylat,

C) 0,5 bis 7,5 Gew.-Teilen Antimontrioxid oder Antimonpentoxid und

D) 10 bis 40 Gew.-Teilen Verstärkungsmittel,

wobei die Summe aus A + B + C + D 100 ergibt,

und wobei bis zu 25 Gew.-Teile Polyalkylenterephthalat durch aromatisches Polycarbonat und/oder Pfropfpolymerisat ersetzt sein können und wobei 1 bis 10 Gew.-Teile (bezogen auf 100 Gew.-Teile A+B+C+D) Polyolefine zugesetzt werden können,

zur Herstellung von Formkörpern, die eine hohe Kriechstromfestigkeit haben und flammwidrig sind.

2. Verwendung gemäß Anspruch 1, wobei als Komponente

A) Polyethylenterephthalat, Polybutylenterephthalat oder Mischungen daraus eingesetzt werden.

3. Verwendung gemäß Anspruch 1, wobei bis zu 20 Gew.-Teile der Komponente A durch wiederaufgearbeitetes Polyalkylenterephthalat und/oder durch aromatisches Polycarbonat ersetzt werden kann.

4. Verwendung gemäß Anspruch 1, wobei als Komponente D Glasfasern eingesetzt werden.

5. Kriechstromfeste, flammwidrige Formkörper, herstellbar aus Formmassen gemäß Anspruch 1.

**Claims**

1. Use of thermoplastic moulding compositions consisting of

A) 32.5 to 74.5 parts by weight polyalkylene terephthalate,

B) 5 to 20 parts by weight pentabromobenzyl acrylate,

C) 0.5 to 7.5 parts by weight antimony trioxide or antimony pentoxide and

D) 10 to 40 parts by weight of reinforcing agents,

the sum of A + B + C + D totalling 100,

and with up to 25 parts by weight polyalkylene terephthalate being replaceable by aromatic polycarbonate and/or graft polymer, and wherein 1 to 10 parts by weight (based on 100 parts by weight A+B+C+D) polyolefins can be added,

for the production of moulded articles which have a high tracking resistance and are flame-resistant.

**2.** Use according to claim 1,
polyethylene terephthalate, polybutylene terephthalate or mixtures thereof being used as component A).

**3.** Use according to claim 1, up to 20 parts by weight of component A being replaceable by reprocessed polyalkylene terephthalate and/or by aromatic polycarbonate.

**4.** Use according to claim 1, glass fibres being used as component D).

**5.** Track-resistant, flame-resistant moulded articles, capable of being produced from moulding compositions according to claim 1.

**Revendications**

**1.** Utilisation de matières à mouler thermoplastiques consistant en

A) 32,5 à 74,5 parties en poids d'un téréphtalate de polyalkylène,
B) 5 à 20 parties en poids d'acrylate de pentabromobenzyle,
C) 0,5 à 7,5 parties en poids de trioxyde d'antimoine ou de pentoxyde d'antimoine et
D) 10 à 40 parties en poids d'agents renforçants,

la somme de A + B + C + D étant égale à 100,
et le téréphtalate de polyalkylène pouvant être remplacé en proportions allant jusqu'à 25 parties en poids par un polycarbonate aromatique et/ou un polymère greffé, ces composants pouvant encore être complétés par 1 à 10 parties en poids (pour 100 parties en poids de A-B+C+D) de polyoléfines,
pour la fabrication d'objets moulés ayant une haute résistance aux courants de fuite et qui sont ignifuges.

**2.** Utilisation selon la revendication 1, dans laquelle on utilise en tant que composant

A) un téréphtalate de polyéthylène, un téréphtalate de polybutylène ou un mélange de ces téréphtalates.

**3.** Utilisation selon la revendication 1, dans laquelle on peut remplacer jusqu'à 20 parties en poids du composant A par un téréphtalate de polyalkylène recyclé et/ou par un polycarbonate aromatique.

**4.** Utilisation selon la revendication 1 dans laquelle on utilise en tant que composant D des fibres de verre.

**5.** Objets moulés résistant aux courants de fuite et ignifuges qu'on peut préparer à partir des matières à mouler selon la revendication 1.